# EUROPEAN PATENT APPLICATION

(11) **EP 3 949 744 A1**
(43) Date of publication of application: **09.02.2022**
(21) Application number: 20783385.6
(22) Date of filing: 26.03.2020
(51) Int. Cl.: A23F 3/16, A23L 2/00, A23L 2/52

(54) **CATECHIN-CONTAINING BEVERAGE, PRODUCTION METHOD THEREFOR, AND METHOD FOR REDUCING BITTERNESS OF CATECHIN-CONTAINING BEVERAGE**

(30) Priority: 29.03.2019 JP 2019068408
(71) Applicant: Suntory Holdings Limited, Osaka 530-8203 (JP)
(72) Inventor: NAKAHARA, Koichi, Soraku-gun, Kyoto 619-0284 (JP); UEMURA, Masahide, Soraku-gun, Kyoto 619-0284 (JP); YOSHII, Takaaki, Soraku-gun, Kyoto 619-0284 (JP)
(74) Representative: Vossius & Partner Patentanwälte Rechtsanwälte mbB
(86) International application number: PCT/JP2020/013696
(87) International publication number: WO 2020/203655

(57) **Abstract**

The present invention aims to provide a catechin-containing beverage having reduced bitterness, a production method thereof, and a method of reducing the bitterness of a catechin-containing beverage. The present invention relates to, for example, a catechin-containing beverage containing one or more catechins; and ethyl glycoside, wherein a weight ratio of the ethyl glycoside to the catechins (ethyl glycoside/catechins) is 0.5 to 35.

## Description

### TECHNICAL FIELD

The present invention relates to a catechin-containing beverage and a production method thereof. The present invention also relates to a method of reducing the bitterness of a catechin-containing beverage.

### BACKGROUND ART

Catechins are a type of polyphenols and known to have useful physiological effects such as an antioxidant effect and an effect of inhibiting cholesterol increase. In recent years, catechin-containing beverages having a relatively high catechin concentration have been developed. However, such beverages have strong bitterness derived from catechins in some cases, and a method of reducing the bitterness derived from catechins has been studied.

Patent Literature 1 discloses a method of reducing the bitterness of catechins using a bitterness inhibitor containing, as an active ingredient, at least one selected from *Myristica fragrans, Scopolia acutangula, Euphorbia lathyris* LINN., *Solanum lyratum, Sambucus williamsii, Eleutherococcus senticosus, Sesamum indicum, Morus alba, Caesalpinia sappan* L., *Monascus purpureus, Perilla frutescens* var. *crispa, Allium tuberosum* Rottler ex Spreng, *Ocimum basilicum, Draba nemorosa, Impatiens balsamina,* and their extracts.

### CITATION LIST

### Patent Literature

Patent Literature 1: JP 2012-121869 A

### SUMMARY OF INVENTION

### - Technical Problem

The bitterness inhibitor of Patent Literature 1 contains plants such as *Myristica fragrans* and *Allium tuberosum* and extracts thereof as active ingredients. Some of such plants and extracts thereof have distinct flavors. Thus, adding the bitterness inhibitor to a catechin-containing beverage imparts flavors of such plants and extracts thereof, impairing the flavor of the beverage in some cases, even if the catechin-derived bitterness is successfully reduced.

The present invention aims to provide a catechin-containing beverage having reduced bitterness and a production method thereof. The present invention also aims to provide a method of reducing the bitterness of a catechin-containing beverage.

### - Solution to Problem

As a result of extensive studies to solve the above issue, the present inventors found that it is possible to reduce catechin-derived bitterness in a beverage containing one or more catechins by adding ethyl glycoside at a predetermined ratio to the catechins.

Specifically, the present invention relates to the following catechin-containing beverage, production method thereof, and the like.
(1) A catechin-containing beverage containing one or more catechins; and ethyl glycoside, wherein a weight ratio of the ethyl glycoside to the catechins (ethyl glycoside/catechins) is 0.5 to 35.
(2) The beverage according to (1) above, wherein the ethyl glycoside is ethyl glucoside.
(3) The beverage according to (1) or (2) above, wherein a catechin concentration is 300 to 2000 ppm.
(4) The beverage according to any one of (1) to (3) above, wherein an ethyl glycoside concentration is 1000 to 20000 ppm.
(5) The beverage according to any one of (1) to (4) above, wherein the beverage is a tea beverage.
(6) The beverage according to (5) above, wherein the tea beverage is a green tea beverage, an oolong tea beverage, or a black tea beverage.
(7) A method of producing a catechin-containing beverage containing one or more catechins and ethyl glycoside, the method including adding ethyl glycoside such that a weight ratio of the ethyl glycoside to the catechins (ethyl glycoside/catechins) in the beverage is 0.5 to 35.
(8) A method of reducing bitterness of a catechin-containing beverage containing one or more catechins, the method including adding ethyl glycoside such that a weight ratio of the ethyl glycoside to the catechins (ethyl glycoside/catechins) in the beverage is 0.5 to 35.

### - Advantageous Effects of Invention

The present invention can provide a catechin-containing beverage having reduced bitterness and a production method thereof. The present invention can also provide a method of reducing the bitterness of a catechin-containing beverage.

### DESCRIPTION OF EMBODIMENTS

### <Catechin-containing beverage>

The catechin-containing beverage of the present invention contains one or more catechins; and ethyl glycoside, wherein a weight ratio of the ethyl glycoside to the catechins (ethyl glycoside/catechins) is 0.5 to 35.

The term "catechins" as used herein refers to the generic term for catechin, gallocatechin, catechin gallate, gallocatechin gallate, epicatechin, epigallocatechin, epicatechin gallate, and epigallocatechin gallate. The one or more catechins may refer to any one or a combination of two or more of the above eight catechins. Preferably, the catechins include epigallocatechin gallate.

The term "catechin content" (concentration) as used herein refers to the total amount (total concentration) of the above eight compounds.

The catechin content can be measured by high performance liquid chromatography (HPLC). Conditions described in Examples can be used as measurement conditions.

Any catechin commonly used in the food and beverage field may be used, and its source is not limited. For example, those extracted from catechin-containing plants can be used. Chemically synthesized catechins may also be used.

A tea extract extracted from tea leaves and/or its refined product can be used to add catechins. The tea extract may be a liquid tea extract extracted from tea leaves with an extraction solvent or a concentrate of such a liquid tea extract. One of them can be used alone, or a combination of these two can be used.

The term "tea leaves" refers to tea leaves selected from those belonging to the genus *Camellia* (e.g., *Camellia sinensis* such as *C. sinensis* var. *sinensis* (including Yabukita species) and C. *sinensis* var. *assamica*) and crossbreeds thereof.

The tea leaves can be categorized into unfermented tea leaves, semi-fermented tea leaves, and fermented tea leaves, depending on the process. One type or two or more types of the tea leaves can be used. Examples of the unfermented tea leaves include green tea leaves such as *Sencha, Bancha,* powdered green tea (*Tencha*)*,* refined green tea (*Gyokuro*)*, Kabusecha, Kamairicha,* stem tea (*Kukicha*)*,* twig tea (*Bocha*)*,* and *Mecha* leaves. Examples of the semi-fermented tea leaves include oolong tea leaves such as *Tieguanyin* tea leaves. Examples of the fermented tea leaves include black tea leaves such as Darjeeling tea leaves and Assam tea leaves. Of these, the tea extract is preferably a green tea leaf extract (green tea extract) because the green tea leaf extract has a high catechin content.

The green tea extract may be a liquid green tea extract or a green tea concentrate. One of them can be used alone, or a combination of these two can be used. The green tea extract is not limited, and one produced by an ordinary method may be used. Herein, the term "liquid green tea extract" refers to an extract that is obtained from green tea leaves with an extraction solvent and that is not concentrated or purified. The green tea concentrate is a product whose catechin concentration is increased by removing a portion of a solvent from the liquid green tea extract, for example. Any concentration method may be used. The green tea concentrate may be a commercially available product.

Examples of the refined product of the tea extract include purified green tea, which is a refined product of the green tea extract. The purified green tea is a product whose catechin purity is increased by refining the liquid green tea extract or the green tea concentrate. The purified green tea may be a commercially available catechin preparation. The catechin concentration can be easily adjusted with the use of the purified green tea.

An ethyl glycoside is a compound having a structure in which the position-1 hydroxy group of a reducing sugar is replaced by an ethoxy group. A preferred reducing sugar for the ethyl glycoside is a monosaccharide, such as glucose, fructose, galactose, mannose, or xylose. The reducing sugar may be in the D form, L form, or DL form. The D form is preferred.

Examples of the ethyl glycoside include ethyl glucoside, ethyl fructoside, ethyl galactoside, ethyl mannoside, and ethyl xyloside. The ethyl glycoside may be of one type or a combination of two or more types. Of these, the ethyl glycoside is preferably ethyl glucoside. The ethyl glucoside may be either ethyl-α-glucoside or ethyl-β-glucoside, or a mixture of ethyl-α-glucoside and ethyl-β-glucoside. In one embodiment, the ethyl glucoside is preferably ethyl-α-glucoside.

The ethyl glycoside may be produced by any method. For example, the ethyl glycoside can be obtained from a reaction between a reducing sugar and ethanol. For example, the ethyl glucoside can be obtained from a reaction between glucose and ethanol.

In the catechin-containing beverage, the weight ratio of the ethyl glycoside to the catechins (ethyl glycoside/catechins) is 0.5 to 35. When the weight ratio of the ethyl glycoside to the catechins in the beverage is in the above range, the catechin-derived bitterness can be reduced.

The catechin concentration in the catechin-containing beverage is preferably 300 ppm or more, more preferably 400 ppm or more, still more preferably 500 ppm or more, yet still more preferably more than 500 ppm, particularly preferably 600 ppm or more, most preferably 1000 ppm or more, and is preferably 2000 ppm or less, more preferably 1700 ppm or less. When the catechin concentration is in the above ranges, the bitterness of the catechin-containing beverage can be effectively reduced. In one embodiment, the catechin concentration in the catechin-containing beverage is preferably 300 to 2000 ppm, more preferably 400 to 2000 ppm, still more preferably 500 to 2000 ppm, yet still more preferably more than 500 ppm and 2000 ppm or less, particularly preferably 600 to 1700 ppm, most preferably 1000 to 1700 ppm. The unit "ppm" used herein refers to ppm of weight/volume (w/v).

In one embodiment of the present invention, the ethyl glycoside concentration in the catechin-containing beverage is preferably 1000 ppm or more, more preferably 2000 ppm or more, and is preferably 20000 ppm or less, more preferably 10000 ppm or less. When the ethyl glycoside concentration is 1000 ppm or more, the catechin-derived bitterness can be more sufficiently reduced. Even when the ethyl glycoside concentration is more than 20000 ppm, the effect of reducing the catechin-derived bitterness may not improve. When the ethyl glycoside concentration is 20000 ppm or less, a flavor such as ethyl glycoside-derived bitterness is less likely to be imparted. In one embodiment, the ethyl glycoside concentration in the catechin-containing beverage is preferably 1000 to 20000 ppm, more preferably 1000 to 10000 ppm, still more preferably 2000 to 10000 ppm.

The ethyl glycoside content (concentration) refers to the total ethyl glycoside content (total concentration). The ethyl glycoside content can be measured by HPLC.

In one embodiment, preferred ranges of the catechin concentration and the ethyl glycoside concentration are as follows.

When the catechin concentration is 100 ppm or more and less than 300 ppm, the ethyl glycoside concentration is 1000 to 2000 ppm.

When the catechin concentration is 300 to 500 ppm, the ethyl glycoside concentration is 1000 to 10000 ppm.

When the catechin concentration is more than 500 ppm and 2000 ppm or less, the ethyl glycoside concentration is 1000 to 20000 ppm.

When the concentrations are in the above ranges, advantageously, adding ethyl glycoside particularly enhances the bitterness reducing effect, as compared to the case where no ethyl glycoside is added.

Preferably, the catechin-containing beverage of the present invention is a tea beverage. The tea beverage is preferably a green tea beverage, an oolong tea beverage, or a black tea beverage, more preferably a green tea beverage.

The term "tea beverage" means a beverage prepared by adding a tea extract extracted from tea leaves. The tea leaves are as described above. One type or a combination of two or more types of the tea leaves can be used. The tea leaf extract can be one produced under usual extraction conditions.

The term "green tea beverage" refers to a beverage containing a green tea extract extracted from green tea leaves as a main component other than water.

One type or a combination of two or more types of the green tea leaves can be used.

The term "black tea beverages" refers to a beverage containing a black tea extract extracted from black tea leaves as a main component other than water.

The term "oolong tea beverage" refers to a beverage containing an oolong tea extract extracted from oolong tea leaves as a main component other than water. One type or a combination of two or more types of the black tea leaves can be used, and one type or a combination of two or more types of the oolong tea leaves can be used.

The tea beverage may contain an extract of a raw plant material other than tea leaves. Examples of the raw plant material other than tea leaves include wheat such as barley and adlay; rice such as brown rice; beans such as soybeans and black soybeans; millets such as buckwheat and foxtail millet; and herbs. One type or a combination of two or more types can be used.

The catechin-containing beverage of the present invention may be a non-tea-based beverage. Examples of the non-tea-based beverage include sports beverages, flavored water, and energy drinks.

The catechin-containing beverage of the present invention may contain one or more additives such as fragrances, vitamins, pigments, antioxidants, acidulants, emulsifiers, preservatives, seasonings, extracts, pH regulators, and quality stabilizers, as long as the effect of the present invention is not impaired.

The catechin-containing beverage of the present invention (beverage composition) may have any suitable form, such as a liquid, gel, slurry, or solid. A liquid form is preferred. A solid beverage is a beverage in a solid form, which is diluted with water or other solvent for beverages so it can be provided as a beverage.

For example, when the catechin-containing beverage of the present invention is in a liquid form, the beverage may be provided in the form of a ready-to-drink type beverage or a concentrated beverage. Of these, the ready-to-drink type beverage is preferred. The term "ready-to-drink type beverage" refers to a beverage that can be directly consumed without dilution. The term "concentrated beverage" refers to a beverage that is diluted with water or other solvent for beverages before consumption.

When the catechin-containing beverage of the present invention is in a solid form, the beverage may have any form, and can be provided in various forms such as powders, granules, and tablets. When the catechin-containing beverage of the present invention is a concentrated beverage or a solid beverage, preferably, the catechin concentration and the ethyl glycoside concentration are in the above preferred ranges when the beverage is diluted with water or the like to a concentration suitable for consumption.

The form of the catechin-containing beverage of the present invention is not limited. However, when the catechin-containing beverage is a liquid, it is preferably provided as a beverage in a sealed container. In one embodiment, preferably, the catechin-containing beverage of the present invention is a beverage in a sealed container. The form of the container is not limited. A beverage in a sealed container or the like can be provided by filling a sealed container such as a bottle, can, plastic bottle, paper package, aluminum pouch, plastic pouch, or the like with the beverage.

### <Method of producing catechin-containing beverage>

The method of producing a catechin-containing beverage of the present invention is a method of producing a catechin-containing beverage containing one or more catechins and ethyl glycoside, the method including adding ethyl glycoside such that a weight ratio of the ethyl glycoside to the catechins (ethyl glycoside/catechins) in the beverage is 0.5 to 35.

In the production method of the present invention and a method of reducing the bitterness (described later), the method and order of adding the components are not limited. The ethyl glycoside may be added by any method in any order, and is only required to be added such that a weight ratio of the ethyl glycoside to the catechins (ethyl glycoside/catechins) in the beverage is 0.5 to 35, depending on the catechin content in the catechin-containing beverage. The ethyl glycoside, catechins, their concentrations, their preferred embodiments, and the like are as described above for the catechin-containing beverage. A tea extract or its refined product can be used to add catechins as described above.

The production method of the present invention can include adding the other components and materials described above in addition to the catechins and ethyl glycoside, and adjusting their amounts. The production method of the present invention can further include, for example, filling a container with the beverage and sealing the container.

### <Method of reducing bitterness of catechin-containing beverage>

The present invention also encompasses the following method of reducing the bitterness of a catechin-containing beverage:
a method of reducing the bitterness of a catechin-containing beverage containing one or more catechins, the method including adding ethyl glycoside such that a weight ratio of the ethyl glycoside to the catechins (ethyl glycoside/catechins) in the beverage is 0.5 to 35.

Adding ethyl glycoside to a catechin-containing beverage such that the weight ratio of the ethyl glycoside to the catechins (ethyl glycoside/catechins) in the beverage is in the predetermined range can reduce the bitterness attributable to the catechins.

### EXAMPLES

The following provides examples that more specifically describe the present invention. The present invention is not limited to these examples.

In Examples, the ethyl glycoside was ethyl-α-D-glucoside (hereinafter, "EG"). The catechin was epigallocatechin gallate (hereinafter, "EGCG").

### <Example 1>

EGCG was dissolved in water, and the bitterness intensity with or without addition of EG was evaluated on a scale of 1 to 7.

Samples (aqueous solutions) were prepared by varying the EGCG concentration in three levels of 500 ppm, 1000 ppm, and 2000 ppm and by varying the EG concentration in eight levels of 0 ppm, 10 ppm, 100 ppm, 1000 ppm, 2000 ppm, 5000 ppm, 10000 ppm, and 20000 ppm.

Two panelists experienced in sensory evaluation performed sensory evaluation on the bitterness of each sample. In the sensory evaluation, each panelist tasted the sample (10 mL) in the mouth for five seconds, spit out the sample, and evaluated the bitterness intensity. When evaluating a different sample, each panelist rinsed the mouth with water until the taste in the mouth disappeared. The bitterness intensity of each sample was evaluated on a scale of 1 to 7 described below. Then, the scores given by the panelists were averaged.

For the sensory evaluation, the panelists discussed together in advance to make sure that samples having no addition of EG (EG concentration of 0 ppm) and having the same EGCG concentration (EGCG concentration of 500 ppm, 1000 ppm, or 2000 ppm) would be given the same score for the bitterness intensity evaluation.

Criteria for bitterness (bitterness intensity)
1: No bitterness was tasted.
2: The bitterness was tasted only slightly.
3: The bitterness was tasted somewhat slightly.
4: The bitterness was tasted.
5: The bitterness was tasted somewhat strongly.
6: The bitterness was tasted strongly.
7: The bitterness was tasted very strongly.

Table 1 shows the weight ratio of the ethyl glycoside (EG) to the catechins (EGCG) (EG/EGCG) in each sample.

Table 2 shows the result of the sensory evaluation (average scores of the bitterness intensity) of each sample.

Table 3 shows the degrees of bitterness reduction achieved by addition of EG, calculated from the results shown in Table 2. The degrees of bitterness reduction shown in Table 3 are values of X minus Y (X - Y), where X is a score of a first sample having one of the EGCG concentrations and not containing EG shown in Table 2, and Y is a score of a second sample having the same EGCG concentration as the first sample and containing EG shown in Table 2.

**[Table 1]**

| EG/catechins | | EGCG (ppm) | | |
|---|---|---|---|---|
| | | 500 | 1000 | 2000 |
| EG (ppm) | 0 | - | - | |
| | 10 | 0.02 | 0.01 | 0.005 |
| | 100 | 0.2 | 0.1 | 0.05 |
| | 1000 | 2 | 1 | 0.5 |
| | 2000 | 4 | 2 | 1 |
| | 5000 | 10 | 5 | 2.5 |
| | 10000 | 20 | 10 | 5 |
| | 20000 | 40 | 20 | 10 |

**[Table 2]**

| Bitterness intensity | | EGCG (ppm) | | |
|---|---|---|---|---|
| | | 500 | 1000 | 2000 |
| EG (ppm) | 0 | 3.0 | 6.0 | 7.0 |
| | 10 | 3.0 | 6.0 | 7.0 |
| | 100 | 3.0 | 5.5 | 7.0 |
| | 1000 | 2.0 | 5.0 | 6.0 |
| | 2000 | 2.0 | 4.5 | 6.0 |
| | 5000 | 2.0 | 3.5 | 6.0 |
| | 10000 | 2.0 | 3.5 | 5.5 |
| | 20000 | 2.5 | 3.5 | 5.0 |

**[Table 3]**

| Degrees of bitterness reduction | | EGCG (ppm) | | |
|---|---|---|---|---|
| | | 500 | 1000 | 2000 |
| EG (ppm) | 0 | - | - | - |
| | 10 | 0.0 | 0.0 | 0.0 |
| | 100 | 0.0 | 0.5 | 0.0 |
| | 1000 | 1.0 | 1.0 | 1.0 |
| | 2000 | 1.0 | 1.5 | 1.0 |
| | 5000 | 1.0 | 2.5 | 1.0 |
| | 10000 | 1.0 | 2.5 | 1.5 |
| | 20000 | 0.5 | 2.5 | 2.0 |

### <Example 2>

A commercially available green tea beverage (catechin concentration: 1500 ppm) was used to evaluate the bitterness intensity with or without addition of EG on a scale of 1 to 7 by the same method as in Example 1. EG was added to give an EG concentration of 5000 ppm. Table 4 shows the weight ratio of the ethyl glycoside (EG) to the catechins (EG/catechins) in the green tea beverage with addition of EG.

Table 4 shows the results of the sensory evaluation (average scores of the bitterness intensity).

**[Table 4]**

| | | EG/catechins | Bitterness intensity |
|---|---|---|---|
| EG | 0 ppm | - | 7.0 |
| | 5000 ppm | 3.3 | 4.0 |

The above results show that when the weight ratio of the ethyl glycoside to the catechins (ethyl glycoside/catechins) in the beverage is 0.5 to 35, the catechin-derived bitterness can be reduced.

The catechins in the green tea beverage used in Example 2 were analyzed by high performance liquid chromatography (HPLC) by the following method. The green tea beverage was directly analyzed as a sample without dilution. The catechin concentration is the total concentration of catechin, gallocatechin, catechin gallate, gallocatechin gallate, epicatechin, epigallocatechin, epicatechin gallate, and epigallocatechin gallate.

### <Method of analyzing catechins>

The catechins were measured by the calibration curve method.

The analysis was performed using a high performance liquid chromatograph analyzer (a system controller (CBM-20A), a PDA detector (SPD-M20AVP), a pump (LC-30AD), a degasser (DGU-20A5R), a column oven (CTO-20AC), and an autosampler (SIL-30AC), all available from Shimadzu Corporation).

### HPLC measurement conditions

- Column: TSK-gel ODS-80Ts QA (4.6 mm I.D. × 150 nm), available from Tosoh Corporation
- Column temperature: 40°C
- Mobile phase:
   Solvent A: 0.1% formic acid aqueous solution
   Solvent B: 0.1% formic acid in acetonitrile
- Gradient conditions (vol%)
   Solvent B: 5% at 0 min, 20% at 19 min, 63% at 20 min, 63% at 25 min, 5% at 26 min, and 5% at 36 min
- Flow rate: 1.0 mL/min
- Sample injection volume: 10 µL
- Detection wavelength: 280 nm
- Standard substances: (-) -epigallocatechin gallate, (-) gallocatechin gallate, (-) epicatechin gallate, (-) catechin gallate, (-) epigallocatechin, (-) gallocatechin, (-) epicatechin, and (+) catechin (available from Nacalai Tesque, Inc.)

### INDUSTRIAL APPLICABILITY

The present invention can provide a beverage having reduced bitterness attributable to catechins.

## Claims

1. A catechin-containing beverage comprising:
one or more catechins; and
ethyl glycoside,
wherein a weight ratio of the ethyl glycoside to the catechins i.e., ethyl glycoside/catechins, is 0.5 to 35.

2. The beverage according to claim 1,
wherein the ethyl glycoside is ethyl glucoside.

3. The beverage according to claim 1 or 2,
wherein a catechin concentration is 300 to 2000 ppm.

4. The beverage according to any one of claims 1 to 3,
wherein an ethyl glycoside concentration is 1000 to 20000 ppm.

5. The beverage according to any one of claims 1 to 4,
wherein the beverage is a tea beverage.

6. The beverage according to claim 5,
wherein the tea beverage is a green tea beverage, an oolong tea beverage, or a black tea beverage.

7. A method of producing a catechin-containing beverage containing one or more catechins and ethyl glycoside, the method comprising:
adding ethyl glycoside such that a weight ratio of the ethyl glycoside to the catechins i.e., ethyl glycoside/catechins, in the beverage is 0.5 to 35.

8. A method of reducing bitterness of a catechin-containing beverage containing one or more catechins, the method comprising:
adding ethyl glycoside such that a weight ratio of the ethyl glycoside to the catechins, i.e., ethyl glycoside/catechins, in the beverage is 0.5 to 35.
